# EUROPÄISCHE PATENTSCHRIFT

(11) **EP 3 752 732 B1**
(45) Veröffentlichungstag und Bekanntmachung des Hinweises auf die Patenterteilung: **08.11.2023**
(21) Anmeldenummer: 19702544.8
(22) Anmeldetag: 22.01.2019
(51) Int. Cl.: F03D 1/06

(54) **VERFAHREN ZUR HERSTELLUNG EINES GETEILTEN ROTORBLATTS UND ROTORBLATT**
METHOD FOR PRODUCING A SPLIT ROTOR BLADE AND ROTOR BLADE
PROCÉDÉ DE FABRICATION D'UNE PALE DE ROTOR DIVISÉE ET PALE DE ROTOR

(30) Priorität: 14.02.2018 DE 102018103344
(43) Veröffentlichungstag der Anmeldung: 23.12.2020
(73) Patentinhaber: Wobben Properties GmbH, 26607 Aurich (DE)
(72) Erfinder: HOFFMANN, Alexander, 26721 Emden (DE); HARMS, Harro, 26639 Wiesmoor (DE); BRENNER, Albrecht, 26607 Aurich (DE)
(74) Vertreter: Eisenführ Speiser
(86) Internationale Anmeldenummer: PCT/EP2019/051519
(87) Internationale Veröffentlichungsnummer: WO 2019/158324

(56) Entgegenhaltungen:
- WO-A1-2016/189092
- WO-A1-2016/198075
- CN-A- 105 952 580
- US-A- 4 474 536
- US-A1- 2015 226 180

## Beschreibung

Die Erfindung betrifft ein Verfahren zur Herstellung eines geteilten Rotorblatts, ein Verfahren zur Verbindung eines geteilten Rotorblatts, ein Rotorblatt, ein Rotorblattsegment, einen Rotor, eine Windenergieanlage sowie eine Produktionseinrichtung zur Herstellung von Rotorblättern.

Windenergieanlagen der eingangs genannten Art sind hinlänglich bekannt. Der derzeit gängigste Typ einer Windenergieanlage ist die sogenannte Horizontalachsen-Windenergieanlage, die üblicherweise mit drei Rotorblättern ausgestattet ist, wobei auch Windenergieanlagen mit einem, zwei, vier oder mehr Rotorblättern möglich sind. Derartige Windenergieanlagen weisen zunehmend größere Bauformen auf, um einerseits eine höhere Nennleistung erreichen zu können und andererseits eine bessere Windausnutzung zu ermöglichen, wobei letztlich eine Steigerung der Wirtschaftlichkeit von Windenergieanlagen das Ziel ist.

Größere Bauweisen von Windenergieanlagen können beispielsweise größere Nabenhöhen oder größere Rotordurchmesser aufweisen. Infolgedessen können derartige Windenergieanlagen größere Generatoren und/oder größere Einspeiseleistungen aufweisen. Insbesondere die größeren Rotordurchmesser resultieren jedoch auch ganz allgemein in größeren Kräften und Momenten an der Windenergieanlage. Die größeren Kräfte werden beispielsweise durch die größeren Fliehkräfte der längeren Rotorblätter verursacht.

Durch diese größeren Kräfte und/oder Momente werden einerseits die Hauptkomponenten einer Windenergieanlage, beispielsweise die Holmgurte innerhalb eines Rotorblatts, größer bzw. belastbarer dimensioniert, und andererseits werden auch weitere Komponenten, wie beispielsweise Befestigungselemente, größer bzw. belastbarer dimensioniert.

Da Rotorblätter in der Regel von einem Produktionsstandort zu einem Aufstellort der Windenergieanlage transportiert und dort an der Nabe montiert werden müssen, ist häufig die Verwendung geteilter Rotorblätter, insbesondere bei Rotorblättern mit großen Längserstreckungen, erforderlich bzw. vorteilhaft. Geteilte Rotorblätter, die also in Längsrichtung wenigstens zwei Teile aufweisen, sind beispielsweise aus der DE 10 2014 206 670 A1 bekannt. Insbesondere bei Aufstellorten in Waldgebieten oder bergigen Regionen können geteilte Rotorblätter erforderlich sein, damit ein Transport zum Aufstellort überhaupt möglich ist.

Aufgrund der größeren Bauweisen von Windenergieanlagen und der damit häufig verbundenen Vergrößerung der einzelnen Rotorblätter erhöhen sich im Allgemeinen auch die Kräfte und/oder Momente innerhalb eines Rotorblattes. Daher ist die Verbindung zwischen einem ersten Rotorblattabschnitt und einem zweiten Rotorblattabschnitt und/oder weiteren Rotorblattabschnitten in der Regel mit einem überproportional höheren Materialaufwand zu gestalten, als es bei kleineren Rotorblättern notwendig wäre.

Die Verbindungsstelle zwischen zwei Rotorblattabschnitten ist ein kritischer Bereich eines Rotorblatts. Da hier die ansonsten durchgängigen, festigkeitsbestimmenden Bauteile, wie beispielsweise die Holmgurte oder die Stege, durchteilt sind, ist diese Stelle anderweitig zu verstärken. Infolgedessen wird der Verbindungsbereich zwischen zwei Rotorblattabschnitten mit umfangreichen technischen Maßnahmen derart gestaltet, dass die erforderliche Festigkeit gewährleistet werden kann. Beispielsweise können zwei Rotorblattabschnitte mit einer Vielzahl an Längsbolzen und Querbolzen miteinander verbunden werden. Die konventionellen technischen Maßnahmen zur Verbindung von Rotorblattabschnitten sind jedoch aufwendig und haben unter anderem ein höheres Gewicht des Rotorblatts zur Folge. Die Verbindungsstellen von Holmgurten können sich aufgrund der in der Regel unidirektionalen Faserrichtung beispielsweise über 8 Meter erstrecken. Ferner sind die konventionellen Maßnahmen wartungsintensiv, da Geänderte Beschreibungsseiten (Reinschrift)
beispielsweise Verschraubungen in regelmäßigen Abständen geprüft werden müssen. Folglich weisen zwei- oder mehrteilige Rotorblätter in der Regel ein höheres Gewicht auf als einteilige Rotorblätter. Bekannte Verbindungsarten aus dem Leichtbau, wie beispielsweise Kleben, sind in der Regel nicht oder lediglich eingeschränkt anwendbar, da diese als zu unwirtschaftlich gelten. Die geringe Wirtschaftlichkeit wird unter anderem durch hohe Kosten und einen hohen Zeitaufwand zur Herstellung der Verbindung bedingt. WO 2016/198075 A1 offenbart ein modulares Windturbinenblatt mit einem ersten und einem zweiten Blattmodul, deren Holmkappen in ihre Außenschalen eingebettet sind. US 4,474,536 A offenbart ein Verfahren zum Verbinden der Abschnitte eines Holzstruktur-Windturbinenblattes und eine Windturbinenblattverbindung. CN 105 952 580 A offenbart ein Windkraftblatt und eine Herstellungstechnologie dafür. US 2015/0226180 A1 offenbart eine Wurzelendvorrichtung für ein Blatt einer Windturbine, die ein Wurzelendelement aufweist, das entlang einer Längserstreckung ein erstes axiales Ende und ein zweites axiales Ende umfasst, das gegenüber dem ersten axialen Ende angeordnet ist.

Das Deutsche Patent- und Markenamt hat in der Prioritätsanmeldung zur vorliegenden Anmeldung folgenden Stand der Technik recherchiert: DE 10 2014 118 004 B3, DE 10 2010 046 519 A1, DE 10 2014 206 670 A1, EP 2 740 583 A1.

Es ist daher eine Aufgabe der vorliegenden Erfindung ein Verfahren zur Herstellung eines geteilten Rotorblatts, ein Verfahren zur Verbindung eines geteilten Rotorblatts, ein Rotorblatt, ein Rotorblattsegment, einen Rotor, eine Windenergieanlage sowie eine Produktionseinrichtung zur Herstellung von Rotorblättern bereitzustellen, die einen oder mehrere der genannten Nachteile vermindern oder beseitigen. Darüber hinaus ist es eine Aufgabe der Erfindung, eine Lösung bereitzustellen, die das Gewicht von geteilten Rotorblättern reduziert.

Gemäß einem ersten Aspekt der vorliegenden Erfindung wird die eingangs genannte Aufgabe gelöst durch ein Verfahren gemäß Anspruch 1 zur Herstellung eines geteilten Rotorblatts.

Der Blattwurzelbereich des bereitgestellten Rotorblatts ist in der Regel der Bereich des Rotorblatts, der der Nabe zugewandt ist. Insbesondere kann der Blattwurzelbereich derart ausgebildet sein, dass dieser mit einer Nabe eines Rotors verbindbar ist. Die Blattspitze des bereitgestellten Rotorblatts ist hingegen das Ende des Rotorblatts, welches einer Nabe eines Rotors abgewandt ist. Das bereitgestellte Rotorblatt weist
ferner den Holmgurt auf, wobei das Rotorblatt vorzugsweise auch zwei oder mehr Holmgurte aufweisen kann. Der Holmgurt ist vorzugsweise derart angeordnet und ausgebildet, dass dieser eine Festigkeit des Rotorblatts in Längsrichtung gewährleistet. Insbesondere ist es bevorzugt, dass das Rotorblatt einen druckseitigen Holmgurt und einen saugseitigen Holmgurt aufweist. Bei einem druckseitigen Holmgurt und einem saugseitigen Holmgurt ist es ferner bevorzugt, dass diese zwei Holmgurte mit einem Steg oder zwei oder mehreren Stegen verbunden sind. Der Holmgurt weist vorzugsweise eine längliche Geometrie auf, die parallel zur Längsachse des Rotorblatts ausgerichtet ist. Der Holmgurt kann ferner eine flächige Geometrie aufweisen, die durch eine Holmgurtlängserstreckung in Längsrichtung des Rotorblatts und eine Holmgurtbreite in Richtung einer Rotorblattbreite gebildet wird. Ferner kann der Holmgurt eine Holmgurtdicke aufweisen, die orthogonal zur Holmgurtlängserstreckung und orthogonal zur Holmgurtbreite ausgerichtet ist. Die Holmgurtlängserstreckung und/oder die Holmgurtbreite weist bzw. weisen vorzugsweise ein Vielfaches der Erstreckung der Holmgurtdicke auf.

Das Rotorblatt weist vorzugsweise eine flächige Erstreckung auf. Die flächige Erstreckung des Rotorblatts wird vorzugsweise durch eine Rotorblattlängserstreckung in Längsrichtung des Rotorblatts und die Rotorblattbreite gebildet. Orthogonal zur Längsrichtung und orthogonal zur Rotorblattbreite weist das Rotorblatt vorzugsweise eine Rotorblattdicke auf. Die flächige Erstreckung des Rotorblatts weist in Längsrichtung eine Vorderkante, die im Betrieb dem Wind zugewandt ist, und eine Hinterkante, die im Betrieb dem Wind abgewandt ist, auf.

Das Rotorblatt weist darüber hinaus mindestens einen Verbindungsbereich, nämlich den ersten Verbindungsbereich, auf. Der erste Verbindungsbereich ist zwischen dem Blattwurzelbereich und der Blattspitze angeordnet. Der erste Verbindungsbereich kann derart an dem Rotorblatt angeordnet sein, dass der blattwurzelzugewandte Rotorblattabschnitt größer 10 %, größer 20 %, größer 30 %, größer 40 %, größer 50 %, größer 60 %, größer 70 %, größer 80 % oder größer 90 % der Rotorblattlängserstreckung ist.

Das Teilen des Rotorblatts in einen blattwurzelzugewandten Rotorblattabschnitt und in einen blattwurzelabgewandten Rotorblattabschnitt erfolgt derart, dass auch die mindestens eine Nut geteilt wird, in einen ersten Nutabschnitt im blattwurzelzugewandten Rotorblattabschnitt und einen zweiten Nutabschnitt im blattwurzelabgewandten Rotorblattabschnitt. Dies hat den Vorteil, dass beide Nutabschnitte nach dem Teilen zueinander fluchten und mittels eines Verbindungsstücks verbunden werden können. Das Verbindungsstück zum Einbringen in die Nutabschnitte und Verbinden der Nutabschnitte ist vorzugsweise durchgängig.

In den Holmgurt können ferner auch zwei oder mehr Nuten eingebracht werden. Diese zwei oder mehreren Nuten können ebenso beim Teilen des Rotorblatts in Nutabschnitte geteilt und durch entsprechende Verbindungsstücke verbunden werden. Die Haupterstreckungsrichtung der Nut kann im Wesentlichen parallel zur Längsrichtung des Rotorblatts ausgerichtet sein. Alternativ kann die Haupterstreckungsrichtung der Nut auch geneigt zu der Längsachse des Rotorblatts ausgerichtet sein, wobei ein Richtungsanteil der Haupterstreckungsrichtung der Nut parallel zur Längsrichtung des Rotorblatts ausgerichtet ist und somit die Haupterstreckungsrichtung nicht parallel zur Rotorblattbreite ist. Die Erstreckung des ersten Verbindungsbereiches parallel zur Längsrichtung des Rotorblatts beträgt vorzugsweise kleiner 25%, und/oder kleiner 15 %, und/oder kleiner 10 %, und/oder kleiner 5 %, und/oder kleiner 1 % der Rotorblattlängserstreckung. Insbesondere ist es bevorzugt, dass die Rotorblattlängserstreckung ein Vielfaches der Erstreckung des ersten Verbindungsbereiches beträgt. Das Verhältnis zwischen Rotorblattlängserstreckung und Erstreckung des ersten Verbindungsbereiches hängt unter anderem von der an dem Verbindungsbereich vorliegenden Holmgurtdicke, der Holmgurtbreite und dem Holmgurtmaterial sowie dem Auslegungsdehnungsniveau ab. Beispielsweise kann bei einer Rotorblattlängserstreckung von 70 Metern eine Erstreckung des ersten Verbindungsbereiches 1 Meter betragen.

In einer bevorzugten Ausführungsvariante des Verfahrens ist vorgesehen, dass das Rotorblatt eine Außenhülle aufweist, wobei die Nut von der Außenhülle ausgehend in die Außenhülle und in den Holmgurt eingebracht wird. Vorzugsweise ist auf der Innenseite der Außenhülle der Holmgurt angeordnet. Vorzugsweise durchdringt die Nut den Holmgurt in Richtung der Holmgurtdicke zu weniger als 95 %, und/oder 90 %, und/oder 80 %, und/oder 70 %, und/oder 60 %, und/oder 50 %, und/oder 40 %, und/oder 30 %, und/oder 20 %. Durch das Einbringen der Nut von der Außenfläche ausgehend in den Holmgurt wird eine gute Erreichbarkeit der Nuten von außen ermöglicht. Somit können Verbindungsstücke in die ersten Nutabschnitte und zweiten Nutabschnitte eingebracht werden, ohne dass ein Monteur in den Innenraum des Rotorblatts gelangen muss.

Gemäß einer weiteren bevorzugten Ausführungsvariante des Verfahrens ist vorgesehen, dass das Teilen, insbesondere des Holmgurts, entlang mindestens einer Teilungsebene erfolgt, wobei die mindestens eine Teilungsebene sich ganz oder abschnittsweise im Wesentlichen orthogonal zu der Längsrichtung des Rotorblatts erstreckt. Die Teilungsebene kann derart angeordnet sein, dass die Längsrichtung des Rotorblatts parallel zu einer Flächenorthogonalen der Teilungsebene ausgerichtet ist. Die orthogonal zur Längsrichtung ausgerichtete Teilungsebene hat den besonderen Vorteil, dass diese schnell und einfach eine Teilung des Rotorblatts, insbesondere des Holmgurts, ermöglicht. Darüber hinaus sind vorbereitende Maßnahmen reduziert, da der gerade Teilungsschnitt ohne aufwendige Positionierungsarbeiten möglich ist. Alternativ oder zusätzlich ist es bevorzugt, dass die Teilungsebene ganz oder abschnittsweise geneigt zur Längsrichtung des Rotorblatts ausgerichtet ist. Eine geneigte Teilungsebene bedeutet insbesondere, dass sich die Teilungsebene einerseits in Richtung der Rotorblattdicke erstreckt, jedoch zudem auch in Längsrichtung des Rotorblatts und in Richtung der Rotorblattbreite. Die geneigte Teilungsebene kann in einer verbesserten Festigkeit der Verbindungsstelle resultieren.

Insbesondere ist es bevorzugt, dass vor dem Teilen des Holmgurts die übrigen im Verbindungsbereich angeordneten Bereiche geteilt bzw. abgetrennt werden. Beispielsweise kann, wie im weiteren Verlauf der Beschreibung noch erläutert wird, ein Abschnitt, der sich vom Holmgurt zur Vorderkante und/oder vom Holmgurt zur Hinterkante erstreckt, abgetrennt werden, sodass im Anschluss im Wesentlichen lediglich noch der Holmgurt und gegebenenfalls ein oder mehrere Holmstege zu trennen sind.

Vorzugsweise wird die Teilungsebene derart im ersten Verbindungsbereich angeordnet, dass der erste Nutabschnitt und der zweite Nutabschnitt gleich groß sind. Die gleiche Größe bedeutet insbesondere, dass diese in Richtung der Haupterstreckungsrichtung der Nut jeweils die gleiche Nutabschnitt-Erstreckung aufweisen. Es sind jedoch auch Varianten möglich, in denen der erste und der zweite Nutabschnitt nicht gleich groß sind. Die Nut kann beispielsweise mittels einer Kreissäge und/oder einer Fräse eingebracht werden. Beim Teilen ist das Rotorblatt vorzugsweise spannungsarm und/oder spannungsfrei positioniert, indem das Blatt beispielsweise großflächig aufgelagert und gegebenenfalls mit weiteren Positionierungshilfen angeordnet und insbesondere fixiert ist.

Darüber hinaus ist es bevorzugt, dass das Teilen mit einer ersten Teilungsebene und mit einer zweiten Teilungsebene erfolgt, wobei sich die erste Teilungsebene von der Vorderkante in Richtung der Hinterkante erstreckt und sich die zweite Teilungsebene von der Hinterkante in Richtung der Vorderkante erstreckt, wobei vorzugsweise die erste Teilungsebene in die zweite Teilungsebene an einem Übergang übergeht. Die erste Teilungsebene und/oder die zweite Teilungsebene kann bzw. können Richtungsanteile in Richtung der Holmgurtlängserstreckung und/oder der Holmgurtbreite aufweisen. Derartig angeordnete Teilungsebenen zeigen einen Teilungsschnitt, der im Wesentlichen V-förmig ist. Es ist darüber hinaus bevorzugt, dass die erste Teilungsebene und die zweite Teilungsebene einen Teilungswinkel einschließen, wobei vorzugsweise der Teilungswinkel größer 30 Bogengrad und kleiner 180 Bogengrad ist, wobei der Übergang von der ersten Teilungsebene zu der zweiten Teilungsebene mehr als 20 %, und/oder 30 %, und/oder 40 %, und/oder 50 %, und/oder 60 %, und/oder 70 %, und/oder 80 % einer Rotorblattbreite von der Vorderkante beabstandet ist. Eine derartige V-förmige Anordnung der Schnitte ist eine spezielle Ausgestaltung der geneigten, zuvor beschriebenen Teilungsebene. Im Prinzip entspricht dies zwei geneigten Teilungsebenen, die eine verbesserte Festigkeit einer Verbindung des blattwurzelzugewandten Rotorblattabschnitts mit dem blattwurzelabgewandten Rotorblattabschnitt ermöglicht. Darüber hinaus können auch drei oder mehr Teilungsebenen vorgesehen werden, wobei vorzugsweise jeweils zwei Teilungsebenen einen gemeinsamen Schnittpunkt aufweisen.

Insbesondere kann es bevorzugt sein, dass eine Teilungsebene nicht oder nicht vollständig als ebene Fläche ausgebildet ist. Vorzugsweise kann eine Teilungsebene eine gleichmäßige oder ungleichmäßige dreidimensionale Struktur aufweisen, beispielsweise kann eine Teilungsebene wellenförmig, zickzackförmig, zinnenförmigen, sägezahnförmigen etc. ausgebildet sein.

Eine weitere bevorzugte Fortbildung des Verfahrens zeichnet sich dadurch aus, dass die Nut orthogonal zur Haupterstreckungsrichtung und orthogonal zu einer Nuttiefe eine Nutbreite aufweist, wobei eine Nutöffnung eine größere Erstreckung in Richtung der Nutbreite aufweist als ein Nutgrund. Die Nutbreite ist vorzugsweise orthogonal zu einer Nuttiefe und orthogonal zu der Haupterstreckungsrichtung der Nut ausgerichtet. Die Nut verjüngt sich vorzugsweise von der Nutöffnung hin zu dem Nutgrund. Der Verlauf von der Nutöffnung zu dem Nutgrund kann verschiedene Geometrien annehmen. Der Verlauf kann beispielsweise stetig und/oder unstetig sein.

Die Nut weist in einer Ebene orthogonal zur Haupterstreckungsrichtung einen Querschnitt auf, der T-förmig ist und gekrümmte Kanten aufweist. Die gekrümmten Kanten des Querschnitts der Nut können beispielsweise die Form einer Hyperbel oder Parabel aufweisen. Derartige Nuten können vorteilhaft in Bezug auf die
Verbindung eines blattwurzelzugewandten Rotorblattabschnitts mit einem blattwurzelabgewandten Rotorblattabschnitt sein, da die Anschlagflächen eines in die Nut eingesetzten Verbindungsstückes größer sind als bei einfacheren Geometrien.

Es ist ferner bevorzugt, dass im ersten Verbindungsbereich ein Vorderkantenabschnitt und/oder ein Hinterkantenabschnitt abgeteilt wird, wobei der Vorderkantenabschnitt vorzugsweise im Wesentlichen den Abschnitt des ersten Verbindungsbereiches umfasst, der sich vom Holmgurt zur Vorderkante des Rotorblatts erstreckt, und/oder der Hinterkantenabschnitt vorzugsweise im Wesentlichen den Abschnitt des ersten Verbindungsbereiches umfasst, der sich vom Holmgurt zur Hinterkante des Rotorblatts erstreckt. Der Vorderkantenabschnitt und/oder der Hinterkantenabschnitt umfassen vorzugsweise keinen Abschnitt des Holmgurts. Insbesondere ist es bevorzugt, dass sich der Vorderkantenabschnitt von der Vorderkante bis zu einer Kante des Holmgurts erstreckt, der der Vorderkante zugewandt ist. Darüber hinaus ist es bevorzugt, dass der Hinterkantenabschnitt sich von der Hinterkante zu einer Kante des Holmgurts erstreckt, die der Hinterkante des Rotorblatts zugewandt ist.

Das Abteilen des Vorderkantenabschnitts und/oder des Hinterkantenabschnitts kann vor dem vollständigen Teilen des Rotorblatts, insbesondere des Holmgurts, erfolgen. In Längsrichtung und in Richtung der Rotorblattbreite kann bzw. können der Vorderkantenabschnitt und/oder der Hinterkantenabschnitt eine im Wesentlichen rechteckige Geometrie aufweisen. Alternativ kann diese Geometrie auch trapez- oder dreieckförmig ausgebildet sein. Darüber hinaus kann es bevorzugt sein, dass eine erste vordere Teilungsstelle des Vorderkantenabschnitts außerhalb der Teilungsebene und/oder an einem blattwurzelzugewandten Ende des ersten Verbindungsbereichs liegt, und/oder eine zweite vordere Teilungsstelle des Vorderkantenabschnitts außerhalb der Teilungsebene und/oder an einem blattwurzelabgewandten Ende des ersten Verbindungsbereichs liegt, und/oder eine erste hintere Teilungsstelle des Hinterkantenabschnitts außerhalb der Teilungsebene und/oder an einem blattwurzelzugewandten Ende des ersten Verbindungsbereichs liegt, und/oder eine zweite hintere Teilungsstelle des Hinterkantenabschnitts außerhalb der Teilungsebene und/oder an einem blattwurzelabgewandten Ende des ersten Verbindungsbereichs liegt.

In einer bevorzugten Ausführungsvariante des Verfahrens ist vorgesehen, dass dieses ein Einbringen einer zweiten Nut in den Holmgurt umfasst, wobei die zweite Nut in einem zweiten Verbindungsbereich des Rotorblatts angeordnet ist, und der zweite Verbindungsbereich in Längsrichtung des Rotorblatts von dem ersten Verbindungsbereich in Richtung der Blattspitze beabstandet ist, Teilen des Rotorblatts im zweiten Verbindungsbereich in einen mittleren Rotorblattabschnitt und in einen blattspitzenzugewandten Rotorblattabschnitt, wobei ein dritter Nutabschnitt der zweiten Nut im mittleren Rotorblattabschnitt und ein vierter Nutabschnitt der zweiten Nut im blattspitzenzugewandten Rotorblattabschnitt angeordnet ist.

Insbesondere bei großen Rotorblattlängserstreckungen in Längsrichtung kann es erforderlich werden, dass diese zwei- oder mehrfach geteilt werden. Bei schlecht zugänglichen Aufstellorten in Wäldern oder in Gebirgen kann eine zwei- oder mehrteilige Ausführung von Rotorblättern erforderlich werden. Zu diesem Zweck bietet sich das Anordnen eines zweiten Verbindungsbereiches mit einer zweiten Nut an, wodurch auch in diesem zweiten Verbindungsbereich eine gewichtssparende und ausreichend feste Verbindung ermöglicht wird.

Gemäß einem weiteren Aspekt der Erfindung wird die eingangs genannte Aufgabe gelöst durch ein Verfahren zur Verbindung eines geteilten Rotorblatts, umfassend Bereitstellen eines mit einem Verfahren nach mindestens einer der im Vorherigen beschriebenen Ausführungsvarianten hergestellten geteilten Rotorblatts, Anordnen und stoffschlüssiges Verbinden, insbesondere mittels eines Klebverfahrens, eines Verbindungsstücks mit dem ersten Nutabschnitt und mit dem zweiten Nutabschnitt.

Das Anordnen des Verbindungsstücks kann auch das Anordnen und Ausrichten des blattwurzelzugewandten Rotorblattabschnitts und des blattwurzelabgewandten Rotorblattabschnitts umfassen. Die zwei Rotorblattabschnitte werden vorzugsweise derart angeordnet, dass die zwei angeordneten Rotorblattabschnitte die Zielkontur des Rotorblatts aufweisen. Daraus folgt unter anderem, dass der erste Nutabschnitt und der zweite Nutabschnitt unmittelbar aneinander angeordnet sind und das Verbindungsstück in dem ersten Nutabschnitt und in dem zweiten Nutabschnitt anordenbar ist. Eine Fuge zwischen den zwei Rotorblattabschnitten ist vorzugsweise so klein wie möglich ausgebildet.

Eine bevorzugte Ausführungsvariante des Verfahrens zur Verbindung eines geteilten Rotorblatts sieht vor, dass ein blattwurzelzugewandter Holmgurtabschnitt des Holmgurts und ein blattwurzelabgewandter Holmgurtabschnitt des Holmgurts zusätzlich zum Verbindungsstück eine Zusatzverbindung aufweisen. Insbesondere ist es bevorzugt, dass die Zusatzverbindung an einer Holmgurtinnenseite des Holmgurts bzw. des blattwurzelzugewandten Holmgurtabschnitts und des blattwurzelabgewandten Holmgurtabschnitts angeordnet ist, wobei die Holmgurtinnenseite dem Innenraum des Rotorblatts zugewandt ist. Ferner ist es bevorzugt, dass die Zusatzverbindung im Bereich der offen zugänglichen Vorder- und Hinterkante angeordnet ist.

Das Anordnen und stoffschlüssige Verbinden des Verbindungsstücks mit dem ersten Nutabschnitt und mit dem zweiten Nutabschnitt umfasst vorzugsweise das Reinigen und/oder Anrauen der Verbindungsoberflächen. Alternativ oder ergänzend können die Verbindungsoberflächen durch Sandstrahlung, und/oder Schleifen, und/oder Abreißgewebe vorbereitet werden. Das stoffschlüssige Verbinden kann mit einem Strukturklebstoff erfolgen, der insbesondere auf Epoxidharz- und/oder Polyurethanbasis aufgebaut ist. Das Verbindungsstück kann Kunststoff umfassen oder aus Kunststoff bestehen. Insbesondere ist es bevorzugt, dass dieser Kunststoff ein glasfaserverstärkter Kunststoff ist, wobei ein pultrudierter glasfaserverstärkter Kunststoff bevorzugt ist. Darüber hinaus kann der Kunststoff auch ein kohlefaserverstärkter Kunststoff sein, wobei auch hier ein pultrudierter kohlefaserverstärkter Kunststoff bevorzugt ist. Um den hohen Festigkeitsanforderungen im ersten Verbindungsbereich und/oder zweiten Verbindungsbereich gerecht zu werden, können Fasern des Verbindungsstücks parallel zur Haupterstreckungsrichtung der Nut ausgerichtet sein. Darüber hinaus können die Fasern parallel zur Hauptkraftrichtung im ersten und/oder zweiten Verbindungsbereich ausgerichtet sein. Ferner können die Fasern im Wesentlichen parallel zur Längsrichtung des Rotorblatts und/oder parallel zu der Holmgurtlängserstreckung ausgerichtet sein.

Darüber hinaus ist es bevorzugt, dass das Verfahren ein Anordnen und Verkleben jeweils eines Verbindungsstücks in dem dritten Nutabschnitt und in dem vierten Nutabschnitt umfasst. Das Verfahren zur Verbindung des geteilten Rotorblatts kann ferner das Ausrichten und Aufstellen auf die Vorderkante oder Hinterkante des Rotorblatts umfassen. Das Aufstellen auf die Vorderkante oder Hinterkante des Rotorblatts hat den besonderen Vorteil, dass Nuten auf der Saugseite und auf der Druckseite des Rotorblatts von einem Monteur gut erreichbar sind.

Das Verbindungsstück kann auch Durchgangslöcher aufweisen, die angeordnet und ausgebildet sind, das Verbindungsstück in dem ersten Nutabschnitt und in dem zweiten Nutabschnitt beispielsweise mittels Befestigungselementen zu fixieren. Eine derartige Fixierung ermöglicht eine wiederholbare Anordnung von mehreren Verbindungsstücken, sodass beispielsweise eine Klebstoffschicht zwischen der Nut und dem Verbindungsstück im Wesentlichen gleichförmig ist. Insbesondere kann somit das Verbindungsstück auch von weniger erfahrenen Monteuren angeordnet werden, ohne dass ein Qualitätsverlust in der Verbindungsstelle auftritt. Ferner können die Durchgangslöcher auch zur Entlüftung angeordnet und ausgebildet sein.

In einer bevorzugten Ausführungsvariante des Verfahrens zur Verbindung eines geteilten Rotorblatts ist ferner vorgesehen, dass die Geometrie des Verbindungsstücks korrespondierend zu der Geometrie der Nut ausgebildet ist. Eine korrespondierende Geometrie des Verbindungsstücks zu der Nutgeometrie bedeutet insbesondere, dass die Geometrie der Nut der Geometrie des Verbindungsstücks im Wesentlichen entspricht. In der Regel wird der Querschnitt des Verbindungsstücks geringfügig geringere Abmessungen aufweisen als der Querschnitt der Nut. Somit ist gewährleistet, dass das Verbindungsstück in der Nut anordenbar ist und darüber hinaus zwischen Verbindungsstück und Nutbegrenzungsflächen ein Verbindungsmittel, wie beispielsweise ein Klebstoff, angeordnet werden kann. Darüber hinaus ist es bevorzugt, dass die Nut und das Verbindungsstück derart ausgebildet sind, dass das Verbindungstück bündig mit der Außenhaut des Rotorblatts abschließt, um aerodynamische Vorteile zu erreichen.

Eine weitere bevorzugte Fortbildung des Verfahrens zur Verbindung eines geteilten Rotorblatts ist dadurch gekennzeichnet, dass ein Abschnitt des Verbindungsstücks, der dem Nutgrund zugewandt ist, eine teilkreisförmige Geometrie aufweist. Beispielsweise kann sich diese teilkreisförmige Geometrie in Richtung der Nut-Breite und/oder in Haupterstreckungsrichtung der Nut erstrecken. Darüber hinaus kann sich die Nut in der Haupterstreckungsrichtung von einem ersten Ende zu einem zweiten Ende erstrecken und sich im Abschnitt, der dem Nutgrund zugewandt ist, zwischen dem ersten Ende und dem zweiten Ende mit einer konkaven Geometrie erstrecken. Diese Ausführungsvariante beschreibt eine Nut, die an ihrem ersten Ende und an ihrem zweiten Ende eine geringere Nuttiefe aufweist als zwischen diesen Enden. Eine derartige Nutgeometrie wird beispielsweise durch das Einsenken eines Kreissägeblattes erzeugt.

In einer weiteren bevorzugten Ausführungsvariante des Verfahrens zur Verbindung eines geteilten Rotorblatts ist vorgesehen, dass der Querschnitt des Verbindungsstücks an den Querschnitt der Nut angepasst ist und/oder dieser entspricht. Darüber hinaus ist es bevorzugt, dass sich das Verbindungsstück von einem ersten Ende zu einem zweiten Ende erstreckt, wobei diese Erstreckung der Haupterstreckungsrichtung des Verbindungsstücks entspricht und beim Einsetzen des Verbindungsstücks in die Nut die Haupterstreckungsrichtung des Verbindungsstücks im Wesentlichen parallel zur Haupterstreckungsrichtung der Nut ausgerichtet ist. Darüber hinaus kann das Verbindungsstück in einem Abschnitt angrenzend an sein erstes Ende und/oder in einem Abschnitt angrenzend an sein zweites Ende verrundet und/oder geschäftet sein, so dass mögliche Kerbspannungen reduziert werden.

Eine weitere bevorzugte Fortbildung des Verfahrens zur Verbindung eines geteilten Rotorblatts zeichnet sich dadurch aus, dass das Verbindungsstück mit einem, zwei oder mehreren Abstandselementen in die Nut eingesetzt wird, wobei die Abstandselemente als Kunststoffklammer und/oder Folienstreifen und/oder Klebeband ausgebildet sein können.

Es ist ferner bevorzugt, dass das Verfahren zur Verbindung eines geteilten Rotorblatts die Schritte umfasst Herstellen einer Verbindung an einer Teilungsstelle eines Stegs, und/oder Herstellen einer Verbindung an einer ersten Teilungsstelle und/oder an einer zweiten Teilungsstelle eines Vorderkantenabschnitts, und/oder Herstellen einer Verbindung an einer Teilungsstelle eines Hinterkantenabschnitts.

Die Verbindungen an den Stegen und/oder an den Vorderkanten- bzw. Hinterkantenabschnitten können konventionell durch Schäften hergestellt werden. Im Gegensatz zum Holmgurt sind in diesen Bereichen in der Regel keine unidirektional ausgerichteten Fasern angeordnet, sondern beispielsweise Biaxial- und/oder Triaxialgelege vorgesehen. Durch derartige Gelege sind die ersten und/oder zweiten Verbindungsbereiche weniger groß als bei Bereichen mit unidirektional ausgerichteten Fasern. Darüber hinaus wirken hier weniger große Kräfte und/oder andere Belastungen, wobei hier insbesondere Schubbelastungen auftreten. Die Blitzschutzanbindung bzw. elektrische Kontaktierung an den Stegen erfolgt in der Regel zusätzlich.

Zur Verbindung des blattwurzelzugewandten Rotorblattabschnitts mit dem blattwurzelabgewandten Rotorblattabschnitt werden diese vorzugsweise spannungsfrei aufgelagert sowie derart ausgerichtet und eingemessen, dass diese zusammen im Wesentlichen der Zielkontur des Rotorblatts entsprechen. Das Anordnen des Verbindungsstücks erfolgt insbesondere unter Berücksichtigung der erforderlichen klimatischen Bedingungen, wobei beispielsweise die Luftfeuchtigkeit sowie Mindest- und Maximaltemperatur beachtet wird. Die Verbindung kann beispielsweise in einem klimatisierten Umfeld, insbesondere einem klimatisierten, mobilen Zelt oder Container, erfolgen, wobei das mobile Zelt oder der mobile Container zumindest für den Verbindungsbereich ein klimatisiertes Umfeld bereitstellen kann. Des Weiteren können die Nut und das Verbindungsstück angeraut und gereinigt werden. Alternativ oder ergänzend kann dies auch mittels Sandstrahlung oder Abreißgewebe erfolgen.

Die Nut wird vorzugsweise vollständig mit einem Klebstoff, insbesondere einem Strukturklebstoff beispielsweise auf Basis von Epoxidharz- oder Polyurethan, befüllt, um anschließend das Verbindungsstück in der Nut anzuordnen. Das Verbindungsstück weist vorzugsweise die im Vorherigen beschriebenen Abstandselemente auf, die die Qualität der Klebstoffverbindung verbessern und/oder eine Zentrierung des Verbindungsstücks in der Nut ermöglichen. Die Abstandselemente können beispielsweise als Kunststoffklammern, Folien oder Klebebänder ausgebildet sein. Zusätzlich kann das Verbindungsstück mittels Schrauben, insbesondere selbstschneidenden Schrauben, in seiner Position fixiert werden, sodass sich diese Position während eines anschließenden Aushärteprozesses im Wesentlichen nicht verändert. Gegebenenfalls werden der blattwurzelzugewandte Steg und der blattwurzelabgewandte Steg mittels eines Stegverbinders miteinander verbunden, wobei der Stegverbinder vorzugsweise ein c-förmiges Profil aufweist. Zusätzlich können die Abschnitte zwischen Holmgurt und Vorderkante und/oder zwischen Holmgurt und Hinterkante mittels eines Vorderkantenabschnitts und/oder eines Hinterkantenabschnitts verschlossen werden. Dies kann beispielsweise mittels Verklebung über geschäftete Randbereiche erfolgen.

Darüber hinaus ist es bevorzugt, dass der Klebstoff aufgeheizt und ausgehärtet wird, wobei auch Zusatzlaminate eingesetzt bzw. aufgeheizt und ausgehärtet werden. Des Weiteren kann insbesondere an einer Außenseite der Außenhülle des Rotorblatts eine Oberflächenvorbereitung vorgenommen werden, die beispielsweise ein Schleifen und/oder Spachteln umfasst. Das Rotorblatt kann insbesondere in dem Verbindungsbereich auch gestrichen und/oder lackiert werden, so dass vorzugsweise durch diesen Farbauftrag ein homogenes Erscheinungsbild des Rotorblatts geschaffen wird.

Gemäß einem weiteren Aspekt der Erfindung wird die eingangs genannte Aufgabe gelöst durch ein Rotorblatt gemäß Anspruch 11 mit einem Holmgurt.

Das Rotorblatt weist vorzugsweise eine Erstreckung in Längsrichtung von einem Blattwurzelbereich zu einer Blattspitze auf. Die Nut ist vorzugsweise dadurch gekennzeichnet, dass diese eine Haupterstreckungsrichtung aufweist, die einen Richtungsanteil aufweist, der parallel zur Längsrichtung des Rotorblatts ausgerichtet ist. Vorzugsweise ist ein erster Nutabschnitt in dem blattwurzelzugewandten Rotorblattabschnitt angeordnet und ein zweiter Nutabschnitt der Nut in dem blattwurzelabgewandten Rotorblattabschnitt angeordnet. Darüber hinaus kann das Rotorblatt eine Außenhülle aufweisen, auf deren Innenseite vorzugsweise der Holmgurt angeordnet ist, wobei sich die Nut von der Außenhülle ausgehend durch die Außenhülle und in den Holmgurt erstreckt. Die Nut erstreckt sich vorzugsweise nicht vollständig durch den Holmgurt, sodass die Nut einen Nutgrund aufweist, der innerhalb des Holmgurtes angeordnet ist.

Die Nut weist vorzugsweise orthogonal zur Haupterstreckungsrichtung und orthogonal zu der Nuttiefe eine Nutbreite auf, wobei eine Nutöffnung eine größere Erstreckung in Richtung der Nutbreite aufweist als der Nutgrund. Die Nut weist einen T-förmigen Querschnitt auf. Insbesondere ist es bevorzugt, dass das Verbindungsstück eine zur Nut korrespondierende Geometrie aufweist, sodass auch das Verbindungsstück eine T-förmige Geometrie aufweisen kann. Ferner kann das Rotorblatt einen zweiten Verbindungsbereich mit einer zweiten Nut aufweisen, wobei der zweite Verbindungsbereich in Längsrichtung des Rotorblatts von dem ersten Verbindungsbereich in Richtung der Blattspitze oder in Richtung des Blattwurzelbereichs beabstandet ist.

Gemäß einem weiteren Aspekt der vorliegenden Erfindung wird die eingangs genannte Aufgabe gelöst durch ein Rotorblattsegment gemäß Anspruch 12 mit einem Verbindungsteilbereich zur Verbindung mit mindestens einem weiteren Rotorblattsegment mit einem korrespondierenden Verbindungsteilbereich, umfassend einen Holmgurt.

Die Rotorblattsegmente können entweder als blattwurzelabgewandtes Rotorblattsegment oder als blattwurzelzugewandtes Rotorblattsegment ausgebildet sein. Die Rotorblattsegmente sind vorzugsweise derart gefertigt, dass ein blattwurzelzugewandtes Rotorblattsegment und ein blattwurzelabgewandtes Rotorblattsegment aneinander angeordnet werden können und gemäß dem Verfahren zur Verbindung eines geteilten Rotorblatts miteinander verbindbar sind. Insbesondere sind die Verbindungsteilbereiche der Rotorblattsegmente zur Verbindung aneinander angeordnet und ausgebildet. Dementsprechend gelten die im Vorherigen beschriebenen Merkmale des Verfahrens zur Verbindung eines geteilten Rotorblatts und des Rotorblatts mit einem Holmgurt für die Rotorblattsegmente mit den entsprechenden Änderungen analog. Gemäß einem weiteren Aspekt der vorliegenden Erfindung wird die eingangs genannte Aufgabe gelöst durch ein Rotorblatt, umfassend ein blattwurzelzugewandtes Rotorblattsegment mit einem ersten Nutabschnitt und ein blattwurzelabgewandtes Rotorblattsegment mit einem zweiten Nutabschnitt, wobei ein Verbindungsstück in dem ersten Nutabschnitt und dem zweiten Nutabschnitt mittels eines stoffschlüssigen Verfahrens, insbesondere Kleben, angeordnet ist. Somit können zwei Rotorblattsegmente unabhängig voneinander gefertigt werden und anschließend an der Aufstellstelle einer Windenergieanlage mittels der Verbindungsstücke miteinander verbunden werden.

Gemäß einem weiteren Aspekt der vorliegenden Erfindung wird die eingangs genannte Aufgabe gelöst durch einen Rotor für eine Windenergieanlage, umfassend mindestens ein nach mindestens einem der Verfahren zur Herstellung eines geteilten Rotorblatts und zur Verbindung eines geteilten Rotorblatt hergestelltes Rotorblatt, und/oder ein Rotorblatt nach dem vorhergehenden Aspekt, und/oder zwei mittels eines Verbindungsstückes verbundene Rotorblattsegmente nach dem vorhergehenden Aspekt.

Gemäß einem weiteren Aspekt der vorliegenden Erfindung wird die eingangs genannte Aufgabe gelöst durch eine Windenergieanlage, umfassend einen Rotor nach dem vorhergehenden Aspekt.

Darüber hinaus wird die eingangs genannte Aufgabe gelöst durch eine Produktionseinrichtung zur Herstellung von Rotorblättern aus einem blattwurzelzugewandten Rotorblattabschnitt und einem blattwurzelabgewandten Rotorblattabschnitt und/oder aus einem blattwurzelzugewandten Rotorblattsegment und einem blattwurzelabgewandten Rotorblattsegment, umfassend einen ersten Container und einen zweiten Container, wobei mindestens einer der Container eine Vorrichtung zur Ausrichtung von Rotorblattabschnitten und/oder Rotorblattsegmenten umfasst, wobei die Container derart angeordnet und ausgebildet sind, dass ein blattwurzelzugewandter Rotorblattabschnitt und ein blattwurzelabgewandter Rotorblattabschnitt und/oder ein blattwurzelzugewandtes Rotorblattsegment und ein blattwurzelabgewandtes Rotorblattsegment zur Verbindung nach mindestens einem der Verfahren zur Verbindung eines geteilten Rotorblatts verbindbar sind. Eine derartige Produktionseinrichtung erfüllt einerseits die Mobilitätsanforderungen, kann aber gleichzeitig die hohen klimatischen Anforderungen an das stoffschlüssige Verbinden, wie beispielsweise Luftfeuchtigkeit, Mindest- und Maximaltemperatur, erfüllen.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Verfahrens zur Herstellung eines geteilten Rotorblatts und des Verfahrens zur Verbindung eines geteilten Rotorblatts verwiesen.

Bevorzugte Ausführungsformen der Erfindung werden beispielhaft anhand der beliegenden Figuren erläutert. Es zeigen:
- Fig. 1:: eine schematische Ansicht einer beispielhaften Ausführungsform einer Windenergieanlage;
- Fig. 2:: eine schematische Draufsicht einer beispielhaften Ausführungsform eines Rotorblatts;
- Fig. 3:: eine schematische Detailansicht des Verbindungsbereichs des in Fig. 2 gezeigten Rotorblatts;
- Fig. 4:: eine schematische Querschnittsansicht des in Fig. 2 gezeigten Rotorblatts;
- Fig. 5:: eine schematische, dreidimensionale Ansicht einer beispielhaften Ausführungsform eines Verbindungsstücks;
- Fig. 6:: eine schematische Ansicht eines geteilten Steges eines in Fig. 2 gezeigten Rotorblatts;
- Fig. 7:: eine weitere schematische Ansicht des geteilten Steges des in Fig. 2 gezeigten Rotorblatts;
- Fig. 8:: eine weitere schematische Querschnittsansicht des in Fig. 2 gezeigten Rotorblatts;
- Fig. 9:: eine schematische Detailansicht eines alternativen Verbindungsbereichs des in Fig. 2 gezeigten Rotorblatts;
- Fig. 10:: eine schematische Detailansicht eines weiteren alternativen Verbindungsbereichs des in Fig. 2 gezeigten Rotorblatts.

In den Figuren sind gleiche oder im Wesentlichen funktionsgleiche bzw. -ähnliche Elemente mit den gleichen Bezugszeichen bezeichnet.

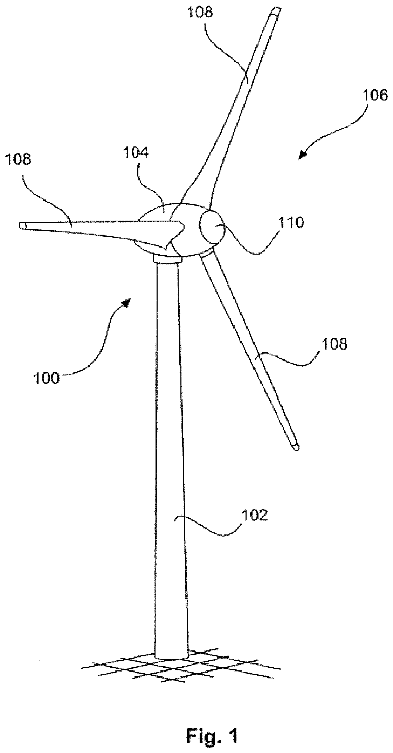

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Die Rotorblätter 108 sind mit dem Verfahren zur Herstellung eines geteilten Rotorblatts und dem Verfahren zur Verbindung eines geteilten Rotorblatts hergestellt, so dass die Rotorblätter 108 einen blattwurzelzugewandten Rotorblattabschnitt und einen blattwurzelabgewandten Rotorblattabschnitt aufweisen.

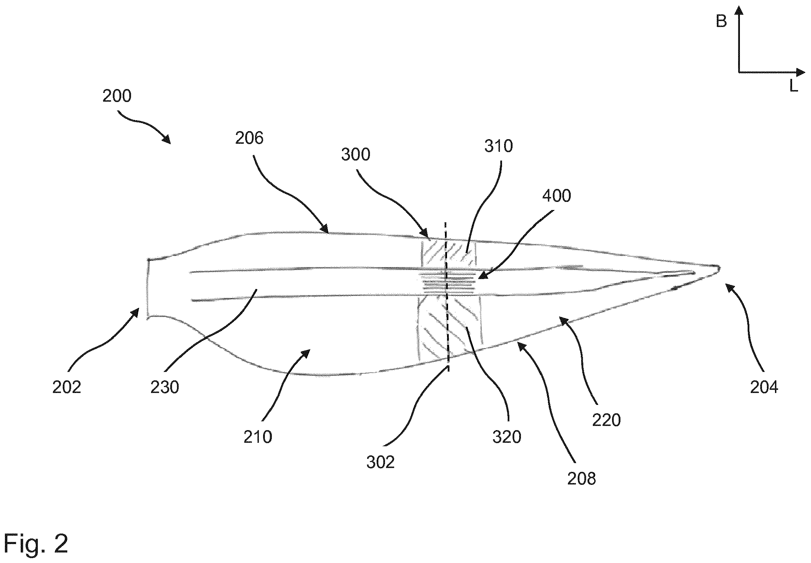

Figur 2 zeigt eine schematische Draufsicht einer beispielhaften Ausführungsform eines Rotorblatts. Das Rotorblatt 200 erstreckt sich in Längsrichtung L von einem Blattwurzelbereich 202 zu einer Blattspitze 204. Ferner erstreckt sich ein Holmgurt 230 von dem Blattwurzelbereich 202 bis im Wesentlichen hin zur Blattspitze 204. Das Rotorblatt weist eine flächige Erstreckung auf, die durch eine Erstreckung in Längsrichtung L und in Richtung der Breite B ausgebildet wird. Das Rotorblatt 200 weist eine Vorderkante 206 und eine Hinterkante 208 auf, die im Wesentlichen parallel zur Längsrichtung L ausgerichtet sind. Es handelt sich vorliegend um ein zu teilendes Rotorblatt, wobei Nuten 400 bereits in den Holmgurt eingebracht sind, jedoch das Rotorblatt noch nicht entlang der Teilungsebene 302 geteilt wurde.

Das Rotorblatt 200 weist zwischen dem Blattwurzelbereich 202 und der Blattspitze 204 einen ersten Verbindungsbereich 300 auf. Der erste Verbindungsbereich 300 ist insbesondere der Abschnitt des Rotorblatts 200, in dem die Teilungsebene 302, die Nuten 400 sowie der Vorderkantenabschnitt 310 und der Hinterkantenabschnitt 320 angeordnet sind. Durch Teilen des Rotorblatts 200 entlang der Teilungsebene 302 entsteht ein blattwurzelzugewandter Rotorblattabschnitt 210 und ein blattwurzelabgewandter Rotorblattabschnitt 220.

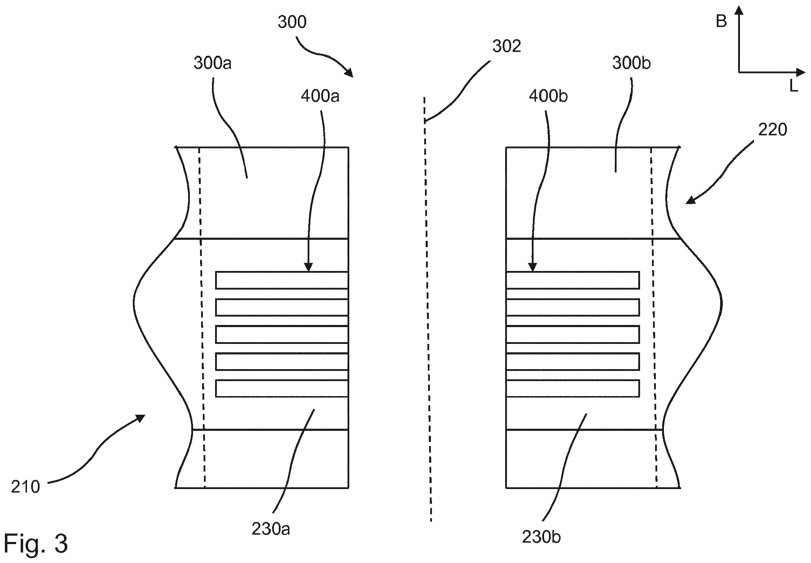

Der in Figur 3 detaillierter dargestellte erste Verbindungsbereich 300 des Rotorblatts 200 umfasst die Nuten 400. Die Nuten 400 weisen vorliegend eine Haupterstreckungsrichtung auf, die parallel zur Längsrichtung L des Rotorblatts ausgerichtet ist. Nachdem das Rotorblatt an der Teilungsebene 302 geteilt wurde, ist der erste Verbindungsbereich 300 in einen blattwurzelzugewandten Verbindungsbereichabschnitt 300a und einen blattwurzelabgewandten Verbindungsbereichabschnitt 300b aufgeteilt. Der blattwurzelzugewandte Verbindungsbereichabschnitt 300a ist infolge der Teilung an dem blattwurzelzugewandten Rotorblattabschnitt 210 angeordnet. Der blattwurzelabgewandte Verbindungsbereichabschnitt 300b ist infolge der Teilung an dem blattwurzelabgewandten Rotorblattabschnitt 220 angeordnet.

Durch die Teilung entlang der Teilungsebene 302 sind darüber hinaus die Nuten 400 in erste Nutabschnitte 400a und in zweite Nutabschnitte 400b geteilt worden. Die ersten Nutabschnitte 400a sind an dem blattwurzelzugewandten Rotorblattabschnitt 210 und die zweiten Nutabschnitte 400b an dem blattwurzelabgewandten Rotorblattabschnitt 220 angeordnet. Durch die Teilung des Rotorblatts 200 ist auch der Holmgurt 230 in einen blattwurzelzugewandten Holmgurtabschnitt 230a und in einen blattwurzelabgewandten Holmgurtabschnitt 230b geteilt. Durch diese Teilung des Holmgurts 230 entsteht eine Schwächung der Festigkeit des Rotorblatts 200 in Längsrichtung L. Zu diesem Zweck sind die Nuten 400 bzw. die ersten Nutabschnitte 400a und die zweiten Nutabschnitte 400b vorgesehen. Der blattwurzelzugewandte Rotorblattabschnitt 210 und der blattwurzelabgewandte Rotorblattabschnitt 220 können mittels Einsetzen von Verbindungsstücken, wie sie im weiteren Verlauf noch beschrieben werden, in die Nutabschnitte 400a,400b fest miteinander verbunden werden. Die Verbindungsstücke werden in die Nutabschnitte 400a,400b vorzugsweise eingeklebt, so dass ein Kraftfluss vom blattwurzelabgewandten Rotorblattabschnitt 220 über die Verbindungsstücke bis hin zum blattwurzelzugewandten Rotorblattabschnitt 210 verläuft.

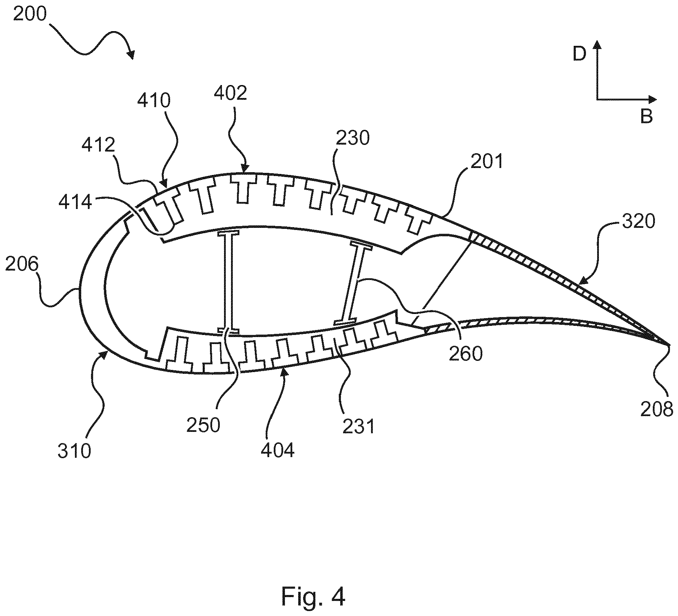

Die in Figur 4 gezeigte Ansicht weist eine Blickrichtung auf, die parallel zur Längsrichtung L des Rotorblatts ausgerichtet ist. Das Rotorblatt 200 weist einen Saugseiten-Holmgurt 230 und einen Druckseiten-Holmgurt 231 auf. Die zwei Holmgurte 230, 231 sind mittels eines vorderen Steges 250, der der Vorderkante 206 zugewandt ist, und eines hinteren Steges 260, der der Vorderkante 206 abgewandt ist, miteinander verbunden. Das Rotorblatt 200 ist im Wesentlichen umhüllt von einer Außenhülle 201. Die Holmgurte 230, 231 sind an Innenseiten der Außenhülle 201 angeordnet. In dem Saugseiten-Holmgurt 230 sind Saugseiten zugewandte Nuten 402 angeordnet. In dem Druckseiten-Holmgurt 231 sind Druckseiten zugewandte Nuten 404 angeordnet.

Die Nuten 402, 404 weisen einen T-förmigen Querschnitt auf. Exemplarisch ist dies an der ersten Nut 410 gezeigt, indem diese eine Nutöffnung 412 aufweist, die eine größere Erstreckung aufweist als ein Nutgrund 414.

Zwischen der Vorderkante 206 und den Holmgurten 230, 231 ist im ersten Verbindungsbereich der Vorderkantenabschnitt 310 angeordnet. Der Vorderkantenabschnitt 310 kann beispielsweise vor der vollständigen Teilung des Rotorblatts 200 im Bereich der Teilungsebene 302 entfernt werden. Der Abschnitt des ersten Verbindungsbereichs 300 zwischen der Hinterkante 208 und den Holmgurten 230, 231 wird durch den Hinterkantenabschnitt 320 ausgebildet, der ebenfalls vor Teilung des Rotorblatts 200 an der Teilungsebene 302 entfernt werden kann. In diesem Fall wird bzw. werden der Vorderkantenabschnitt 310 und/oder der Hinterkantenabschnitt 320 nicht entlang der Teilungsebene 302 geteilt.

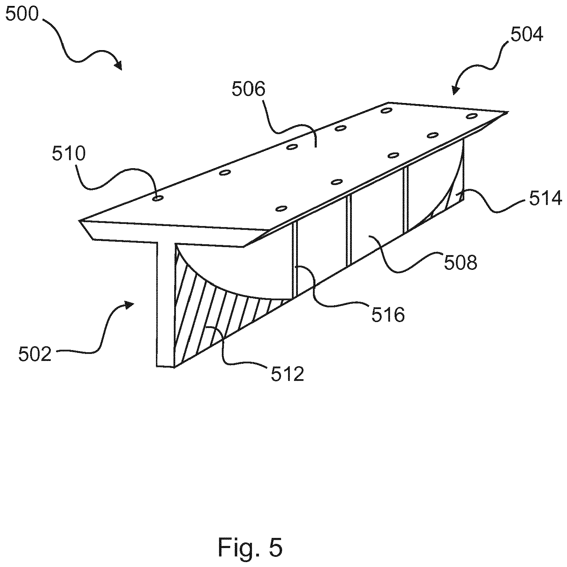

Figur 5 zeigt eine schematische, dreidimensionale Ansicht einer beispielhaften Ausführungsform eines Verbindungsstücks. Das Verbindungsstück 500 erstreckt sich von einem ersten Ende 502 zu einem zweiten Ende 504. Das Verbindungsstück 500 weist einen T-förmigen Querschnitt auf. Der T-förmige Querschnitt wird dadurch gebildet, dass das Verbindungsstück 500 einen flächigen Halteabschnitt 506 aufweist und einen flächenorthogonal dazu angeordneten flächigen Einführabschnitt 508. Der Einführabschnitt 508 ist mittig an einer flächigen Erstreckung des Halteabschnitts 506 angeordnet, sodass der T-förmige Querschnitt entsteht.

Das Verbindungsstück 500 weist ferner an dem Halteabschnitt 506 eine Mehrzahl an Verbindungsstücköffnungen 510 auf. Die Verbindungsstücköffnungen 510 sind insbesondere derart angeordnet und ausgebildet, dass diese mit einem Befestigungselement zur Fixierung und/oder zur Entlüftung verwendet werden können. Die Verbindungsstücköffnungen 510 können insbesondere derart ausgebildet sein, dass in diesen selbstschneidende Schrauben angeordnet werden können, wobei durch die Schrauben eine Fixierung des Verbindungsstücks 500 in der Nut ermöglicht wird. Darüber hinaus weist das Verbindungsstück 500 drei Abstandselemente 516 auf, mit denen ein definierter Abstand zwischen dem Verbindungsstück 500 und einer Nut, insbesondere einem Nutgrund, gewährleistet werden kann. Ferner können vier oder mehr Abstandselemente 516 angeordnet werden.

Schraffiert dargestellt sind eine erste Abtrennfläche 512 und eine zweite Abtrennfläche 514. Das Verbindungsstück kann beispielsweise ohne die erste Abtrennfläche 512 und/oder ohne die zweite Abtrennfläche 514 hergestellt werden. Somit hat das Verbindungsstück 500 in dem Abschnitt, der dem Nutgrund zugewandt ist, eine teilkreisförmige Geometrie. Dadurch kann das Verbindungsstück beispielsweise in eine Nut eingesetzt werden, die mittels eines Kreissägeblatts hergestellt wurde.

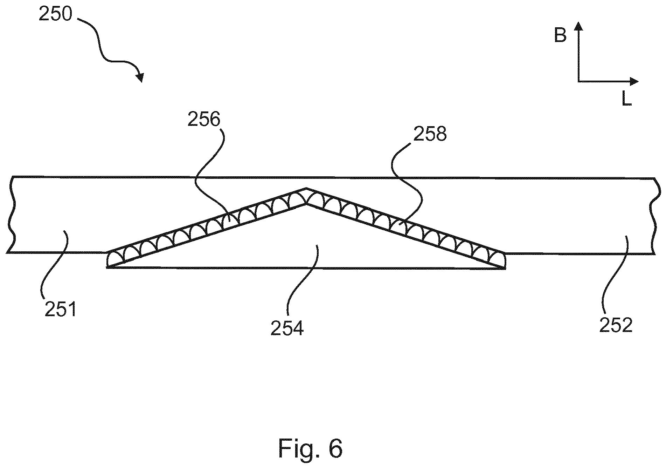

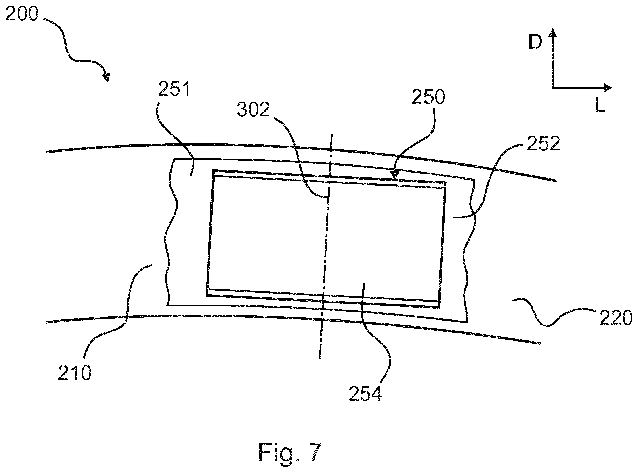

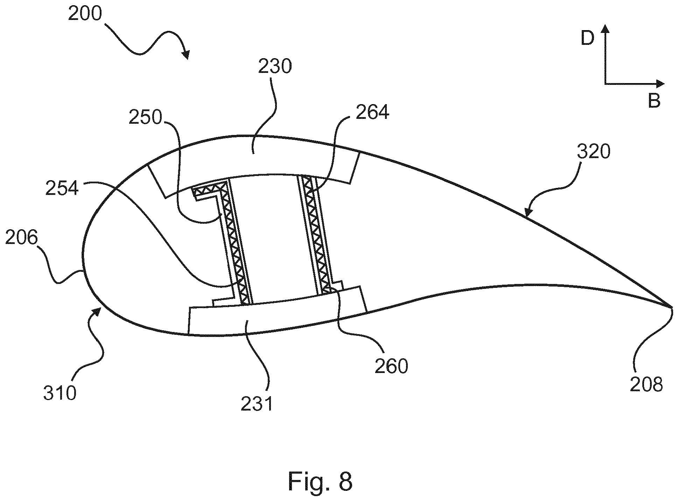

In den Figuren 6 und 7 ist die Verbindung eines durchteilten Steges 250 gezeigt, wobei zur Verbindung des blattwurzelzugewandten Stegabschnitts 251 mit dem blattwurzelabgewandten Stegabschnitt 252 ein Steg-Verbindungsstück 254 eingesetzt wird. Dies erfolgt beispielsweise auch mittels Kleben an einer ersten Verbindungsfläche 256 und einer zweiten Verbindungsfläche 258. In Figur 8 ist eine weitere schematische Querschnittsansicht gezeigt, die die Holmgurte 230, 231 stark vereinfacht darstellen, ohne dass die Nuten erkennbar sind. Ferner sind die Steg-Verbindungstücke 254, 264 in einem C-Profil ausgeführt, das eine Erstreckung in Richtung der Dicke D zwischen den Holmgurten 230, 231 aufweist und ferner Fortsätze im Wesentlichen in Richtung der Breite B aufweisen. Die Steg-Verbindungstücke 254, 264 sind derart ausgebildet, dass ein Fortsatz an dem Druckseiten-Holmgurt 231 und ein weiterer Fortsatz an dem Saugseiten-Holmgurt 231 anliegt.

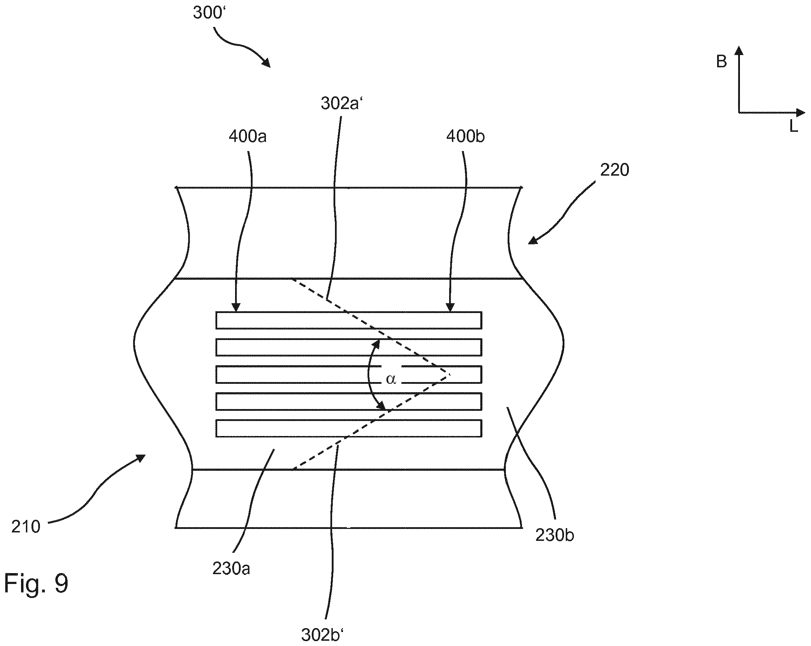

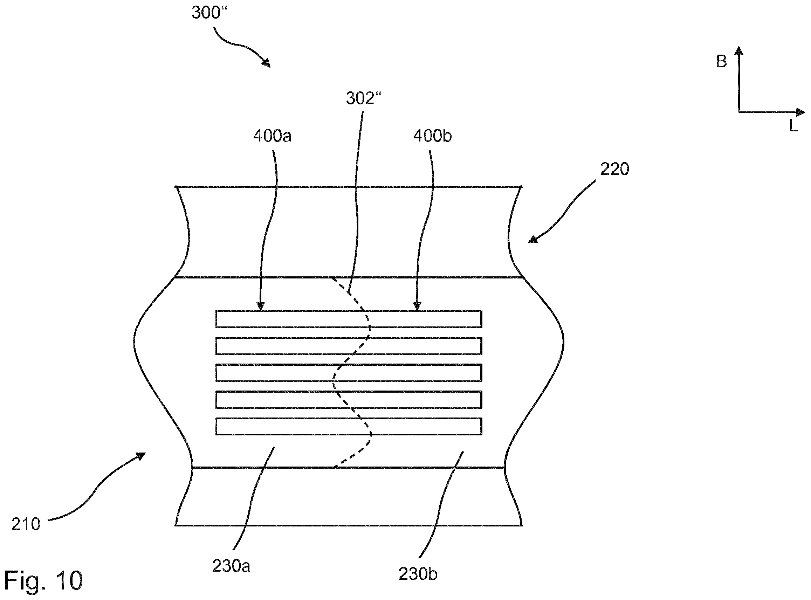

In den Figuren 9 und 10 sind alternative Ausbildungen der Teilungsebene 302 dargestellt. Der in Figur 9 gezeigte Teilungsschnitt weist eine V-förmige Geometrie auf. Insbesondere weist der Teilungsschnitt eine erste Teilungsebene 302a` und eine zweite Teilungsebene 302b` auf, wobei der von den Teilungsebenen 302a', 302b` eingeschlossene Winkel α beliebig zwischen kleiner 360 Bogengrad, insbesondere kleiner 180 Bogengrad, und größer 0 Bogengrad gewählt werden kann. Die Herstellung derartiger Teilungsebenen 302a', 302b` wird auch als gepfeilter Sägeschnitt bezeichnet. Die in Figur 10 gezeigte Teilungsebene 302" weist eine wellige bzw. wellenförmige Teilungsebene auf. Darüber hinaus kann die Teilungsebene auch einen zinnenförmigen oder sägezahnförmigen Verlauf aufweisen. Diese alternativ ausgebildeten Teilungsebenen 302a', 302b`, 302" können die Festigkeit im Verbindungsbereich 300', 300" verbessern. Insbesondere kann in Bezug auf Torsion eine formschlüssige Verbindung der Rotorblattabschnitte gebildet werden.

Die in den Figuren 9 und 10 dargestellte Teilung in einen blattwurzelzugewandten Holmgurtabschnitt 230a und in einen blattwurzelabgewandten Holmgurtabschnitt 230b ist auch in Varianten möglich, in denen die Teilungsebenen gespiegelt angeordnet sind. Dies würde schematischen Darstellungen entsprechen, in denen die blattwurzelzugewandten und blattwurzelabgewandten Holmgurtabschnitte vertauscht sind.

Durch die Herstellung eines geteilten Rotorblatts 200 mit einem ersten Verbindungsbereich 300, 300', 300", wobei im ersten Verbindungsbereich 300, 300', 300" im Bereich eines Holmgurtes 230 Nuten 400 angeordnet werden und das Rotorblatt 200 entlang der Teilungsebene 302, 302', 302" geteilt wird, kann ein vorteilhaft transportierbares Rotorblatt 200 bereitgestellt werden. Durch die Verbindung des blattwurzelzugewandten Rotorblattabschnitts 210 und des blattwurzelabgewandten Rotorblattabschnitts 220 beispielsweise an einem Aufstellort einer Windenergieanlage 100 mittels in die Nuten 400 eingesetzte Verbindungsstücke 500 kann eine besonders gewichtssparende oder gewichtsneutrale Verbindung eines geteilten Rotorblatts 200 bereitgestellt werden. Durch die spezielle Anordnung der Nuten 400 im ersten Verbindungsbereich 300, 300`, 300" bzw. im Holmgurt 230 und dem Einkleben mindestens eines, vorzugsweise einer Vielzahl von Verbindungsstücken 500 in die Nuten 400 kann eine festigkeitsgewährleistende Verbindung realisiert werden.

Durch die erfindungsgemäße Verbindung von zwei Rotorblattabschnitten kann das Gewicht eines zweigeteilten Rotorblatts derart niedrig gehalten werden, dass dessen Gewicht vergleichbar ist mit dem Gewicht eines einteiligen Rotorblatts. Diese Art der Teilung wirkt sich nicht laststeigernd für das Rotorblatt und die weiteren Komponenten der Windenergieanlagen infolge höheren Gewichts aus. Darüber hinaus ist die Verbindung im Wesentlichen wartungsfrei.

### BEZUGSZEICHEN

- 100: Windenergieanlage
- 102: Turm
- 104: Gondel
- 106: Rotor
- 108,200: Rotorblatt
- 110: Spinner
- 201: Außenhülle
- 202: Blattwurzelbereich
- 204: Blattspitze
- 206: Vorderkante
- 208: Hinterkante
- 210: blattwurzelzugewandter Rotorblattabschnitt
- 220: blattwurzelabgewandter Rotorblattabschnitt
- 230: Saugseiten-Holmgurt
- 230a: blattwurzelzugewandter Holmgurtabschnitt
- 230b: blattwurzelabgewandter Holmgurtabschnitt
- 231: Druckseiten-Holmgurt
- 250: vorderer Steg
- 251: blattwurzelzugewandter Stegabschnitt
- 252: blattwurzelabgewandter Stegabschnitt
- 254, 264: Steg-Verbindungsstück
- 256: erste Verbindungsfläche
- 258: zweite Verbindungsfläche
- 260: hinterer Steg
- 300, 300', 300": erster Verbindungsbereich
- 300a: blattwurzelzugewandter Verbindungsbereichabschnitt
- 300b: blattwurzelabgewandter Verbindungsbereichabschnitt
- 302, 302a', 302b', 302": Teilungsebene
- 310: Vorderkantenabschnitt
- 320: Hinterkantenabschnitt
- 400: Nuten
- 400a: erste Nutabschnitte
- 400b: zweite Nutabschnitte
- 402: saugseitenzugewandte Nuten
- 404: druckseitenzugewandte Nuten
- 410: erste Nut
- 412: Nutöffnung
- 414: Nutgrund
- 500: Verbindungsstück
- 502: erstes Ende
- 504: zweites Ende
- 506: Halteabschnitt
- 508: Einführabschnitt
- 510: Verbindungsstücköffnung
- 512: erste Abtrennfläche
- 514: zweite Abtrennfläche
- 516: Abstandselement
- B: Breite
- D: Dicke
- L: Länge

## Patentansprüche

1. Verfahren zur Herstellung eines geteilten Rotorblatts (200), umfassend
- Bereitstellen eines Rotorblatts (200) mit
∘ einem Holmgurt (230, 231), und
∘ einer Erstreckung in Längsrichtung (L) von einem Blattwurzelbereich (202) zu einer Blattspitze (204),
- Einbringen mindestens einer Nut (400, 410) in den Holmgurt (230, 231), wobei die Nut (400, 410) in einem ersten Verbindungsbereich (300, 300', 300") des Rotorblatts (200) angeordnet ist, und
- Teilen des Rotorblatts (200) im ersten Verbindungsbereich (300, 300', 300") in einen blattwurzelzugewandten Rotorblattabschnitt (210) und in einen blattwurzelabgewandten Rotorblattabschnitt (220), wobei ein erster Nutabschnitt (400a) im blattwurzelzugewandten Rotorblattabschnitt (210) und ein zweiter Nutabschnitt (400b) im blattwurzelabgewandten Rotorblattabschnitt (220) angeordnet ist
**dadurch gekennzeichnet, dass** die Nut (400, 410) in einer Ebene orthogonal zu einer Haupterstreckungsrichtung einen Querschnitt aufweist, der T-förmig ist und gekrümmte Kanten aufweist.

2. Verfahren nach Anspruch 1,
**dadurch gekennzeichnet, dass** das Rotorblatt (200) eine Außenhülle (201) aufweist, wobei die Nut (400, 410) von der Außenhülle (201) ausgehend in die Außenhülle (201) und in den Holmgurt (230, 231) eingebracht wird.

3. Verfahren nach mindestens einem der vorhergehenden Ansprüche, **dadurch gekennzeichnet, dass** das Teilen, insbesondere des Holmgurts, entlang mindestens einer Teilungsebene (302, 302a', 302b', 302") erfolgt, wobei die mindestens eine Teilungsebene (302, 302a', 302b', 302")
- sich ganz oder abschnittsweise im Wesentlichen orthogonal zu der Längsrichtung (L) des Rotorblatts (200) erstreckt, und/oder
- ganz oder abschnittsweise geneigt zur Längsrichtung (L) des Rotorblatts (200) ausgerichtet ist.

4. Verfahren nach mindestens einem der vorhergehenden Ansprüche,
**dadurch gekennzeichnet, dass**
die Nut (400, 410) orthogonal zur Haupterstreckungsrichtung und orthogonal zu einer Nuttiefe eine Nutbreite aufweist, wobei eine Nutöffnung (412) eine größere Erstreckung in Richtung der Nutbreite aufweist als ein Nutgrund (414), und/oder
**dadurch gekennzeichnet, dass** die gekrümmten Kanten des Querschnitts der Nut (400, 410) die Form einer Hyperbel oder Parabel aufweisen.

5. Verfahren nach mindestens einem der vorhergehenden Ansprüche, **dadurch gekennzeichnet, dass** im ersten Verbindungsbereich (300, 300', 300") ein Vorderkantenabschnitt (310) und/oder ein Hinterkantenabschnitt (320) abgeteilt wird, wobei
- der Vorderkantenabschnitt (310) vorzugsweise im Wesentlichen den Abschnitt des ersten Verbindungsbereiches (300, 300', 300") umfasst, der sich vom Holmgurt (230, 231) zur Vorderkante (206) des Rotorblatts (200) erstreckt, und/oder
- der Hinterkantenabschnitt (320) vorzugsweise im Wesentlichen den Abschnitt des ersten Verbindungsbereiches (300, 300', 300") umfasst, der sich vom Holmgurt (230, 231) zur Hinterkante (208) des Rotorblatts (200) erstreckt.

6. Verfahren nach mindestens einem der vorhergehenden Ansprüche, **dadurch gekennzeichnet, dass**
- eine erste vordere Teilungsstelle des Vorderkantenabschnitts (310) außerhalb der Teilungsebene (302, 302a', 302b', 302") und/oder an einem blattwurzelzugewandten Ende des ersten Verbindungsbereichs (300, 300', 300") liegt, und/oder
- eine zweite vordere Teilungsstelle des Vorderkantenabschnitts (310) außerhalb der Teilungsebene (302, 302a', 302b', 302") und/oder an einem blattwurzelabgewandten Ende des ersten Verbindungsbereichs (300, 300', 300") liegt, und/oder
- eine erste hintere Teilungsstelle des Hinterkantenabschnitts (320) außerhalb der Teilungsebene (302, 302a', 302b', 302") und/oder an einem blattwurzelzugewandten Ende des ersten Verbindungsbereichs (300, 300', 300") liegt, und/oder
- eine zweite hintere Teilungsstelle des Hinterkantenabschnitts (320) außerhalb der Teilungsebene (302, 302a', 302b', 302") und/oder an einem blattwurzelabgewandten Ende des ersten Verbindungsbereichs (300, 300', 300") liegt.

7. Verfahren nach mindestens einem der vorhergehenden Ansprüche, umfassend
- Einbringen einerzweiten Nut (400) in den Holmgurt (230, 231), wobei
∘ die zweite Nut (400) in einem zweiten Verbindungsbereich des Rotorblatts (200) angeordnet ist, und
∘ der zweite Verbindungsbereich in Längsrichtung (L) des Rotorblatts (200) von dem ersten Verbindungsbereich (300, 300', 300") in Richtung der Blattspitze (204) beabstandet ist,
- Teilen des Rotorblatts (200) im zweiten Verbindungsbereich in einen mittleren Rotorblattabschnitt und in einen blattspitzenzugewandten Rotorblattabschnitt, wobei ein dritter Nutabschnitt der zweiten Nut (400) im mittleren Rotorblattabschnitt und ein vierter Nutabschnitt der zweiten Nut (400) im blattspitzenzugewandten Rotorblattabschnitt angeordnet ist.

8. Verfahren zur Verbindung eines geteilten Rotorblatts (200), umfassend
- Bereitstellen eines mit einem Verfahren nach mindestens einem der vorhergehenden Ansprüche 1-7 hergestellten geteilten Rotorblatts (200),
- Anordnen und stoffschlüssiges Verbinden, insbesondere mittels eines Klebverfahrens, eines Verbindungsstücks (500) mit dem ersten Nutabschnitt (400a) und mit dem zweiten Nutabschnitt (400b).

9. Verfahren nach dem vorhergehenden Anspruch 8,
**dadurch gekennzeichnet, dass** die Geometrie des Verbindungsstücks (500) korrespondierend zu der Geometrie der Nut (400, 410) ausgebildet ist,
und/oder
**dadurch gekennzeichnet, dass** der Querschnitt des Verbindungsstücks (500) an den Querschnitt der Nut (400, 410) angepasst ist und/oder dieser entspricht.

10. Verfahren nach mindestens einem der vorhergehenden Ansprüche 8-9, umfassend
- Herstellen einer Verbindung an einer Teilungsstelle eines Stegs (250,260), und/oder
- Herstellen einer Verbindung an einer ersten Teilungsstelle und/oder an einer zweiten Teilungsstelle eines Vorderkantenabschnitts (310), und/oder
- Herstellen einer Verbindung an einer dritten Teilungsstelle und/oder an einer vierten Teilungsstelle eines Hinterkantenabschnitts (320).

11. Rotorblatt (200) mit einem Holmgurt (230, 231), umfassend
- einen blattwurzelzugewandten Rotorblattabschnitt (210) und einen blattwurzelabgewandten Rotorblattabschnitt (220), die in einem ersten Verbindungsbereich (300, 300', 300") aneinander angeordnet sind, wobei
- der Holmgurt (230, 231) im ersten Verbindungsbereich eine Nut (400, 410) aufweist, wobei ein erster Nutabschnitt (400a) im blattwurzelzugewandten Rotorblattabschnitt (210) und ein zweiter Nutabschnitt (400b) im blattwurzelabgewandten Rotorblattabschnitt (220) angeordnet ist, und
- ein Verbindungsstück (500) in dem ersten Nutabschnitt (400a) und in dem zweiten Nutabschnitt (400b) mittels eines stoffschlüssigen Verfahrens, insbesondere einem Klebverfahren, angeordnet ist,
- wobei der erste Verbindungsbereich (300, 300', 300") durch Teilung entlang einer Teilungsebene, die ganz oder abschnittsweise geneigt zu einer Längsrichtung des Rotorblatts ausgerichtet ist, in einen in einen blattwurzelzugewandten Verbindungsbereichabschnitt (300a) und einen blattwurzelabgewandten Verbindungsbereichabschnitt (300b) aufgeteilt ist, und/oder wobei eine Haupterstreckungsrichtung der Nut geneigt zu einer Längsachse des Rotorblatts ausgerichtet ist,
**dadurch gekennzeichnet, dass** die Nut (400, 410) in einer Ebene orthogonal zu einer Haupterstreckungsrichtung einen Querschnitt aufweist, der T-förmig ist und gekrümmte Kanten aufweist.

12. Rotorblattsegment mit einem Verbindungsteilbereich zur Verbindung mit mindestens einem weiteren Rotorblattsegment mit einem korrespondierenden Verbindungsteilbereich, umfassend einen Holmgurt (230, 231),
- wobei der Verbindungsteilbereich einen Nutabschnitt in dem Holmgurt (230, 231) zur Anordnung eines Verbindungsstücks (500) aufweist,
- wobei der Verbindungsteilbereich durch Teilung eines erste Verbindungsbereichs (300, 300', 300") eines Rotorblatts entlang einer Teilungsebene, die ganz oder abschnittsweise geneigt zu einer Längsrichtung des Rotorblatts ausgerichtet ist, erzeugt ist, und/oder wobei eine Haupterstreckungsrichtung des Nutabschnitts geneigt zu einer Längsachse des Rotorblattsegments ausgerichtet ist,
**dadurch gekennzeichnet, dass** der Nutabschnitt in einer Ebene orthogonal zu einer Haupterstreckungsrichtung einen Querschnitt aufweist, der T-förmig ist und gekrümmte Kanten aufweist.

13. Rotor (106) für eine Windenergieanlage, umfassend
- mindestens ein nach den Verfahren der Ansprüche 1-7 und 8-10 hergestelltes Rotorblatt (200), und/oder
- ein Rotorblatt (200) nach Anspruch 11, und/oder
- zwei mittels eines Verbindungsstücks (500) verbundene Rotorblattsegmente nach Anspruch 12.

14. Windenergieanlage (100), umfassend
einen Rotor (106) nach dem vorherigen Anspruch.

15. Produktionseinrichtung zur Herstellung von Rotorblättern (108, 200) aus einem blattwurzelzugewandten Rotorblattabschnitt (210) und einem blattwurzelabgewandten Rotorblattabschnitt (220) und/oder aus einem blattwurzelzugewandten Rotorblattsegment und einem blattwurzelabgewandten Rotorblattsegment, umfassend einen ersten Container und einen zweiten Container, wobei mindestens einer der Container eine Vorrichtung zur Ausrichtung von Rotorblattabschnitten (210, 220) und/oder Rotorblattsegmenten umfasst, wobei die Container derart angeordnet und ausgebildet sind, dass ein blattwurzelzugewandter Rotorblattabschnitt (210) und ein blattwurzelabgewandter Rotorblattabschnitt (220) und/oder ein blattwurzelzugewandtes Rotorblattsegment und ein blattwurzelabgewandtes Rotorblattsegment zur Verbindung nach einem der Ansprüche 8-10 verbunden sind.

## Claims

1. A method for producing a split rotor blade (200), comprising
- providing a rotor blade (200) having
∘ a spar cap (230, 231), and
∘ an extent in the longitudinal direction (L) from a blade root region (202) to a blade tip (204),
- making at least one groove (400, 410) in the spar cap (230, 231), wherein the groove (400, 410) is arranged in a first connection region (300, 300', 300") of the rotor blade (200), and
- splitting the rotor blade (200), in the first connection region (300, 300', 300"), into a rotor blade section (210) facing the blade root and a rotor blade section (220) facing away from the blade root, wherein a first groove section (400a) is arranged in the rotor blade section (210) facing the blade root and a second groove section (400b) is arranged in the rotor blade section (220) facing away from the blade root
**characterized in that** the groove (400, 410) has a cross section in a plane orthogonal to a main direction of extent which is T-shaped and has curved edges.

2. The method as claimed in claim 1,
**characterized in that** the rotor blade (200) has an outer shell (201), wherein the groove (400, 410) is made in the outer shell (201) and in the spar cap (230, 231), starting from the outer shell (201).

3. The method as claimed in at least one of the preceding claims, **characterized in that** splitting, in particular splitting of the spar cap, takes place along at least one splitting plane (302, 302a', 302b', 302"), wherein the at least one splitting plane (302, 302a', 302b', 302")
- extends completely or in one or more sections substantially orthogonally to the longitudinal direction (L) of the rotor blade (200), and/or
- is aligned completely or in one or more sections at a slope to the longitudinal direction (L) of the rotor blade (200).

4. The method as claimed in at least one of the preceding claims,
**characterized in that**
the groove (400, 410) has a groove width orthogonally to the main direction of extent and orthogonally to a groove depth, wherein a groove opening (412) has a greater extent in the direction of the groove width than a groove bottom (414), and/or **characterized in that** the curved edges of the cross section of the groove (400, 410) have the form of a hyperbola or parabola.

5. The method as claimed in at least one of the preceding claims, **characterized in that** a leading edge section (310) and/or a trailing edge section (320) is partitioned off in the first connection region (300, 300', 300"), wherein
- the leading edge section (310) preferably substantially comprises the section of the first connection region (300, 300', 300") which extends from the spar cap (230, 231) to the leading edge (206) of the rotor blade (200), and/or
- the trailing edge section (320) preferably substantially comprises the section of the first connection region (300, 300', 300") which extends from the spar cap (230, 231) to the trailing edge (208) of the rotor blade (200).

6. The method as claimed in at least one of the preceding claims, **characterized in that**
- a first front splitting point of the leading edge section (310) lies outside the splitting plane (302, 302a', 302b', 302") and/or at an end of the first connection region (300, 300', 300") facing the blade root, and/or
- a second front splitting point of the leading edge section (310) lies outside the splitting plane (302, 302a', 302b', 302") and/or at an end of the first connection region (300, 300', 300") facing away from the blade root, and/or
- a first rear splitting point of the trailing edge section (320) lies outside the splitting plane (302, 302a', 302b', 302") and/or at an end of the first connection region (300, 300', 300") facing the blade root, and/or
- a second rear splitting point of the trailing edge section (320) lies outside the splitting plane (302, 302a', 302b', 302") and/or at an end of the first connection region (300, 300', 300") facing away from the blade root.

7. The method as claimed in at least one of the preceding claims, comprising
- making a second groove (400) in the spar cap (230, 231), wherein
∘ the second groove (400) is arranged in a second connection region of the rotor blade (200), and
∘ the second connection region is spaced apart from the first connection region (300, 300', 300") in the direction of the blade tip (204), in the longitudinal direction (L) of the rotor blade (200),
- splitting of the rotor blade (200) in the second connection region into a central rotor blade section and a rotor blade section facing the blade tip, wherein a third groove section of the second groove (400) is arranged in the central rotor blade section, and a fourth groove section of the second groove (400) is arranged in the rotor blade section facing the blade tip.

8. A method for connecting a split rotor blade (200), comprising
- providing a split rotor blade (200) produced by a method as claimed in at least one of preceding claims 1-8,
- arranging and connecting in a materially integral manner, in particular by means of an adhesive bonding method, a connection piece (500) to the first groove section (400a) and to the second groove section (400b).

9. The method as claimed in preceding claim 8,
**characterized in that** the geometry of the connection piece (500) is designed to correspond to the geometry of the groove (400, 410) and/or
**characterized in that** the cross section of the connection piece (500) is adapted to the cross section of the groove (400, 410) and/or corresponds thereto.

10. The method as claimed in at least one of preceding claims 8-9,
comprising
- producing a connection at a splitting point of a web (250, 260), and/or
- producing a connection at a first splitting point and/or at a second splitting point of a leading edge section (310), and/or
- producing a connection at a third splitting point and/or at a fourth splitting point of a trailing edge section (320).

11. A rotor blade (200) having a spar cap (230, 231), comprising
- a rotor blade section (210) facing the blade root, and a rotor blade section (220) facing away from the blade root, which are arranged one against the other in a first connection region (300, 300', 300"), wherein
- the spar cap (230, 231) has a groove (400, 410) in the first connection region, wherein a first groove section (400a) is arranged in the rotor blade section (210) facing the blade root, and a second groove section (400b) is arranged in the rotor blade section (220) facing away from the blade root, and
- a connection piece (500) is arranged in the first groove section (400a) and in the second groove section (400b) by means of a materially integral method, in particular an adhesive bonding method,
- wherein the first connecting region (300, 300', 300") is split into a connection region section facing the blade root (300a) and a connection region section facing away from the blade root (300b) by splitting along a splitting plane which is aligned wholly or partially inclined to a longitudinal direction of the rotor blade, and/or wherein a main direction of extent of the groove is aligned inclined to a longitudinal axis of the rotor blade,
**characterized in that** the groove (400, 410) has a cross section in a plane orthogonal to a main direction of extent which is T-shaped and has curved edges .

12. A rotor blade segment having a connection subregion for connection to at least one further rotor blade segment having a corresponding connection subregion, comprising a spar cap (230, 231),
- wherein the connection subregion has a groove section in the spar cap (230, 231) for the arrangement of a connection piece (500),
- wherein the connecting subregion is generated by splitting a first connection region (300, 300', 300") of a rotor blade along a splitting plane which is aligned wholly or partially inclined to a longitudinal direction of the rotor blade, and/or wherein a main direction of extent of the groove section is aligned inclined to a longitudinal axis of the rotor blade segment,
**characterized in that** the groove section has a cross section in a plane orthogonal to a main direction of extent which is T-shaped and has curved edges .

13. A rotor (106) for a wind power installation, comprising
- at least one rotor blade (200) produced by the methods in claims 1-7 and 8-10, and/or
- a rotor blade (200) as claimed in claim 11, and/or
- two rotor blade segments, connected by means of a connection piece (500), as claimed in claim 12.

14. A wind power installation (100), comprising
a rotor (106) as claimed in the preceding claim.

15. A production system for producing rotor blades (108, 200) from a rotor blade section (210) facing the blade root and a rotor blade section (220) facing away from the blade root, and/or from a rotor blade segment facing the blade root and a rotor blade segment facing away from the blade root, comprising a first container and a second container, wherein at least one of the containers comprises a device for aligning rotor blade sections (210, 220) and/or rotor blade segments, wherein the containers are arranged and designed in such a way that a rotor blade section (210) facing the blade root and a rotor blade section (220) facing away from the blade root, and/or a rotor blade segment facing the blade root and a rotor blade segment facing away from the blade root, are connected for connection as claimed in any of claims 8-10.

## Revendications

1. Procédé de fabrication d'une pale de rotor divisée (200), comprenant
- la fourniture d'une pale de rotor (200) avec
- - un longeron (230, 231) et
- - une extension dans la direction longitudinale (L) depuis une zone de racine de pale (202) vers une pointe de pale (204),
- la pratique d'au moins une rainure (400, 410) dans le longeron (230, 231), dans lequel la rainure (400, 410) est disposée dans une première zone de liaison (300, 300', 300'') de la pale de rotor (200), et
- la division de la pale de rotor (200) dans la première zone de liaison (300, 300', 300'') dans une section de pale de rotor (210) tournée vers la racine de pale et dans une section de pale de rotor (220) opposée à la racine de pale, dans lequel une première section de rainure (400a) est disposée dans la section de pale de rotor (210) tournée vers la racine de pale et une deuxième section de rainure (400b) est disposée dans la section de pale de rotor (220) opposée à la racine de pale de rotor,
**caractérisé en ce que** la rainure (400, 410) présente dans un plan de manière orthogonale à une direction d'extension principale une section transversale, qui est en forme de T et présente des bords incurvés.

2. Procédé selon la revendication 1,
**caractérisé en ce que** la pale de rotor (200), présente une enveloppe extérieure (201), dans lequel la rainure (400, 410) est pratiquée en partant de l'enveloppe extérieure (201) dans l'enveloppe extérieure (201) et dans le longeron (230, 231).

3. Procédé selon au moins l'une quelconque des revendications précédentes, **caractérisé en ce que** la division, en particulier du longeron, est effectuée le long d'au moins un plan de division (302, 302a', 302b', 302"), dans lequel l'au moins un plan de division (302, 302a', 302b', 302")
- s'étend en totalité ou par endroits de manière sensiblement orthogonale par rapport à la direction longitudinale (L) de la pale de rotor (200), et/ou
- est orientée en totalité ou par endroits de manière inclinée par rapport à la direction longitudinale (L) de la pale de rotor (200).

4. Procédé selon au moins l'une quelconque des revendications précédentes,
**caractérisé en ce que**
la rainure (400, 410) présente, de manière orthogonale par rapport à la direction d'extension principale et de manière orthogonale par rapport à une profondeur de rainure, une largeur de rainure, dans lequel une ouverture de rainure (412) présente une extension en direction de la largeur de rainure plus grande qu'une base de rainure (414), et/ou
**caractérisé en ce que** les bords incurvés de la section transversale de la rainure (400, 410) présentent la forme d'une hyperbole ou d'une parabole.

5. Procédé selon au moins l'une quelconque des revendications précédentes,
**caractérisé en ce qu'**une section de bord avant (310) et/ou une section de bord arrière (320) sont divisées dans la première zone de liaison (300, 300', 300''), dans lequel
- la section de bord avant (310) comprend de préférence sensiblement la section de la première zone de liaison (300, 300', 300''), qui s'étend depuis le longeron (230, 231) vers le bord avant (206) de la pale de rotor (200), et/ou
- la section de bord arrière (320) comprend de préférence sensiblement la section de la première zone de liaison (300, 300', 300''), qui s'étend depuis le longeron (230, 231) vers le bord arrière (208) de la pale de rotor (200).

6. Procédé selon au moins l'une quelconque des revendications précédentes,
**caractérisé en ce que**
- un premier emplacement de division avant de la section de bord avant (310) se situe à l'extérieur du plan de division (302, 302a', 302b', 302'') et/ou sur une extrémité, tournée vers la racine de pale, de la première zone de liaison (300, 300', 300"), et/ou
- un deuxième emplacement de division de la section de bord avant (310) se situe à l'extérieur du plan de division (302, 302a', 302b', 302'') et/ou sur une extrémité, opposée à la racine de pale, de la première zone de liaison (300, 300', 300"), et/ou
- un premier emplacement de division arrière de la section de bord arrière (320) se situe à l'extérieur du plan de division (302, 302a', 302b', 302'') et/ou sur une extrémité, tournée vers la racine de pale, de la première zone de liaison (300, 300', 300"), et/ou
- un deuxième emplacement de division de la section de bord arrière (320) se situe à l'extérieur du plan de division (302, 302a', 302b', 302'') et/ou sur une extrémité, opposée à la racine de pale, de la première zone de liaison (300, 300', 300").

7. Procédé selon au moins l'une quelconque des revendications précédentes,
comprenant
- la pratique d'une deuxième rainure (400) dans le longeron (230, 231), dans lequel
- - la deuxième rainure (400) est disposée dans une deuxième zone de liaison de la pale de rotor (200), et
- - la deuxième zone de liaison est tenue à distance de la première zone de liaison (300, 300', 300") en direction de la pointe de pale (204) dans la direction longitudinale (L) de la pale de rotor (200),
- la division de la pale de rotor (200) dans la deuxième zone de liaison dans une section de pale de rotor centrale et dans une section de pale de rotor tournée vers la pointe de pale, dans lequel une troisième section de rainure de la deuxième rainure (400) est disposée dans la section centrale de pale de rotor et une quatrième section de rainure de la deuxième rainure (400) est disposée dans la section de pale de rotor tournée vers la pointe de pale.

8. Procédé destiné à relier une pale de rotor (200) divisée, comprenant
- la fourniture d'une pale de rotor (200) divisée avec un procédé selon au moins l'une quelconque des revendications 1-7 précédentes,
- la disposition et la liaison par liaison de matière, en particulier au moyen d'un procédé de collage, d'une pièce de liaison (500) à la première section de rainure (400a) et à la deuxième section de rainure (400b).

9. Procédé selon la revendication 8 précédente,
**caractérisé en ce que** la géométrie de la pièce de liaison (500) est réalisée de manière à correspondre à la géométrie de la rainure (400, 410),
et/ou
**caractérisé en ce que** la section transversale de la pièce de liaison (500) est adaptée à la section transversale de la rainure (400, 410) et/ou correspond à celle-ci.

10. Procédé selon au moins l'une quelconque des revendications 8-9 précédentes, comprenant
- la fabrication d'une liaison sur un emplacement de division d'une nervure (250, 260), et/ou
- la fabrication d'une liaison sur un premier emplacement de division et/ou sur un deuxième emplacement de division d'une section de bord avant (310), et/ou
- la fabrication d'une liaison sur un troisième emplacement de liaison et/ou sur un quatrième emplacement de liaison d'une section de bord arrière (320) .

11. Pale de rotor (200) avec un longeron (230, 231), comprenant
- une section de pale de rotor (210) tournée vers la racine de pale et une section de pale de rotor '220) opposée à la racine de pale, qui sont disposées l'une sur l'autre dans une première zone de liaison (300, 300', 300"),
dans laquelle
- le longeron (230, 231) présente, dans la première zone de liaison, une rainure (400, 410), dans laquelle une première section de rainure (400a) est disposée dans la section de pale de rotor (210) tournée vers la racine de pale et une deuxième section de rainure (400b) est disposée dans la section de pale de rotor (220) opposée à la racine de pale, et
- une pièce de liaison (500) est disposée dans la première section de rainure (400a) et dans la deuxième section de rainure (400b) au moyen d'un procédé de liaison de matière, en particulier d'un procédé de collage,
- dans laquelle la première zone de liaison (300, 300', 300'') est divisée par division le long d'un plan de division, qui est orienté, en totalité ou par endroits, de manière inclinée par rapport à une direction longitudinale de la pale de rotor, en une section de zone de liaison (300a) tournée vers la racine de pale et en une section de zone de liaison (300b) opposée à la racine de pale, et/ou dans laquelle une direction d'extension principale de la rainure est orientée de manière inclinée par rapport à un axe longitudinal de la pale de rotor,
**caractérisée en ce que** la rainure (400, 410) présente, orthogonal par rapport à une direction d'extension principale, une section transversale qui présente une forme de T ou des bords incurvés.

12. Segment de pale de rotor avec une zone de division de liaison destiné à être relié à au moins un autre segment de pale de rotor avec une zone de division de liaison correspondante, comprenant un longeron (230, 231),
- dans lequel la zone de division de liaison présente une section de rainure dans le longeron (230, 231) pour disposer une pièce de liaison (500),
- dans lequel la zone de division de liaison est produite en divisant une première zone de liaison (300, 300', 300") d'une pale de rotor le long d'un plan de division, qui est orienté, en totalité ou par endroits, de manière inclinée par rapport à une direction longitudinale de la pale de rotor, et/ou
dans lequel une direction d'extension principale de la section de rainure est orientée de manière inclinée par rapport à un axe longitudinal du segment de pale de rotor,
**caractérisé en ce que** la section de rainure présente, dans un plan orthogonal par rapport à une direction d'extension principale, une section transversale qui est en forme de T et présente des bords incurvés.

13. Rotor (106) pour une éolienne, comprenant
- au moins une pale de rotor (200) fabriquée selon les procédés des revendications 1-7 et 8-10, et/ou
- une pale de rotor (200) selon la revendication 11, et/ou
- deux segments de pale de rotor selon la revendication 12 reliés au moyen d'une pièce de liaison (500) .

14. Eolienne (100) comprenant
un rotor (106) selon la revendication précédente.

15. Dispositif de production destiné à fabriquer des pales de rotor (108, 200) à partir d'une section de pale de rotor (210) tournée vers la racine de pale et d'une section de pale de rotor (220) opposée à la racine de pale et/ou à partir d'un segment de pale de rotor tourné vers la racine de pale et d'un segment de pale de rotor opposé à la racine de pale, comprenant un premier conteneur et un deuxième conteneur, dans lequel au moins un des conteneurs comprend un dispositif destiné à orienter des sections de pale de rotor (210, 220) et/ou des segments de pale de rotor, dans lequel les conteneurs sont disposés et sont réalisés de telle manière qu'une section de pale de rotor (210) tournée vers la racine de pale et une section de pale de rotor (220) opposée à la racine de pale et/ou un segment de pale de rotor tourné vers la racine de pale et un segment de pale de rotor opposé à la racine de pale à relier sont reliés selon l'une quelconque des revendications 8-10.
